Europäisches Patentamt

European Patent Office

Office européen des brevets

(11) Veröffentlichungsnummer: **0 423 464 A1**

## (12) EUROPÄISCHE PATENTANMELDUNG

(21) Anmeldenummer: 90116315.4

(22) Anmeldetag: 25.08.90

(51) Int. Cl.⁵: **F16H 7/08**, F02D 11/10

(30) Priorität: 14.10.89 DE 3934387

(43) Veröffentlichungstag der Anmeldung:
24.04.91 Patentblatt 91/17

(84) Benannte Vertragsstaaten:
AT DE FR GB SE

(71) Anmelder: **ROBERT BOSCH GmbH**
**Postfach 10 60 50**
**W-7000 Stuttgart 10(DE)**

(72) Erfinder: **Maldener, Klaus**
**Liehenbachstrasse 29**
**W-7582 Bühlertal(DE)**

(54) **Zugmittelgetriebe.**

(57) Bei Zugmittelgetrieben mit z. B. einem Zahnriemen und mindestens zwei Zahnriemenscheiben, ist es für deren Betriebssicherheit besonders wichtig, daß eine wirksame Länge des Zahnriemens genau eingestellt ist.

Besonders einfach kann die wirksame Länge des Zahnriemens (33) durch ein den Zahnriemen (33) in einem gewissen Bereich umschlingendes, bleibend verformbares Element (40) eingestellt und bei Bedarf korrigiert werden.

Das erfindungsgemäß ausgebildete Zugmittelgetriebe mit dem bleibend verformbaren Element ist besonders vorteilhaft bei einem Zahnriemen, über den eine Stellbewegung eines Stellmotors auf eine Drosselklappe eines Verbrennungsmotors eines Kraftfahrzeugs übertragen werden soll.

FIG. 1

## ZUGMITTELGETRIEBE

### Stand der Technik

Die Erfindung betrifft ein Zugmittelgetriebe nach der Gattung der Ansprüche 1 oder 3. Das Zugmittelgetriebe dient zum Übertragen von Bewegungen zwischen mehreren Getriebeelementen, wobei ein Teil der Getriebeelemente die Funktion von Antriebselementen und ein Teil der Getriebeelemente die Funktion von Abtriebselementen hat. Bewegungen zwischen den An- bzw. Abtriebselementen werden mit Hilfe eines Zugmittels übertragen. Es gibt geschmeidige Zugmittel, wie z. B. Keilriemen und es gibt gegliederte Zugmittel wie z. B. Ketten.

Bei Zugmittelgetrieben besteht das Problem, daß die einzelnen An- bzw. Abtriebselemente je nach Fertigungstoleranz verschiedene Abstände zueinander haben und die Länge der einzelnen Zugmittel kann ebenfalls je nach Fertigungstoleranz in unerwünschtem Maße vom Idealmaß abweichen. Um hierfür Abhilfe zu schaffen, gibt es verschiedene Lösungsansätze. Es gibt Zugmittelgetriebe, bei denen ein federvorgespanntes Spannrad auf das Zugmittel einwirkt, so daß sich das Zugmittel im Bereich des Spannrades je nach Toleranzlage mehr oder weniger weit durchbiegt. Wegen nie ganz zu vermeidender Reibung im Bereich des Spannrades wird dadurch ein Gesamtwirkungsgrad des Zugmittelgetriebes vermindert. Das Spannrad sorgt für eine gewisse Spannung im Zugmittel, was auch auf die An- bzw. Abtriebselemente wirkt. Die Getriebeelemente müssen deshalb entsprechend dimensioniert und gelagert sein. Es gibt aber auch die Möglichkeit, daß man das Zugmittel an einer geeigneten Stelle auftrennt und hier z. B. eine Feder einsetzt. Dies hat jedoch den Nachteil, daß ins Abhängigkeit von mehreren Toleranzen die Feder mehr oder weniger gespannt ist. Dadurch können die Vorspannkräfte innerhalb des Zugmittels recht unterschiedlich ausfallen und es mussen auch hier zusätzliche Kräfte durch die Getriebeelemente aufgefangen werden.

### Vorteile der Erfindung

Demgegenüber weist das mit den kennzeichnenden Merkmalen der Ansprüche 1 oder 3 ausgestattete Zugmittelgetriebe den Vorteil auf, daß eine Vielzahl von in der Fertigung üblicherweise auftretenden Toleranzen, insbesondere beim Abstand der Getriebeelemente und bei der Länge des Zugmittels, einfach und leicht ausgeglichen werden können. Das Zugmittelgetriebe nach Anspruch 1 weist darüber hinaus den Vorteil auf, daß der Ausgleich auch noch beim bereits fertig montierten Zugmittelgetriebe erfolgen kann.

Durch die in den Unteransprüchen aufgeführten Maßnahmen sind vorteilhafte Weiterbildungen und Verbesserungen des im Hauptanspruch angegebenen Zugmittelgetriebes möglich.

Besonders vorteilhaft ist, daß das Zugmittel durch ein verformbares bzw. vorgeformtes Element auf nahezu jede beliebige, wirksame Länge gebracht werden kann, wodurch z. B. ein Durchhängen des Zugmittels einfach und leicht verhindert werden kann. Damit werden Funktionsstörungen innerhalb des Zugmittelgetriebes wirksam verhindert.

### Zeichnung

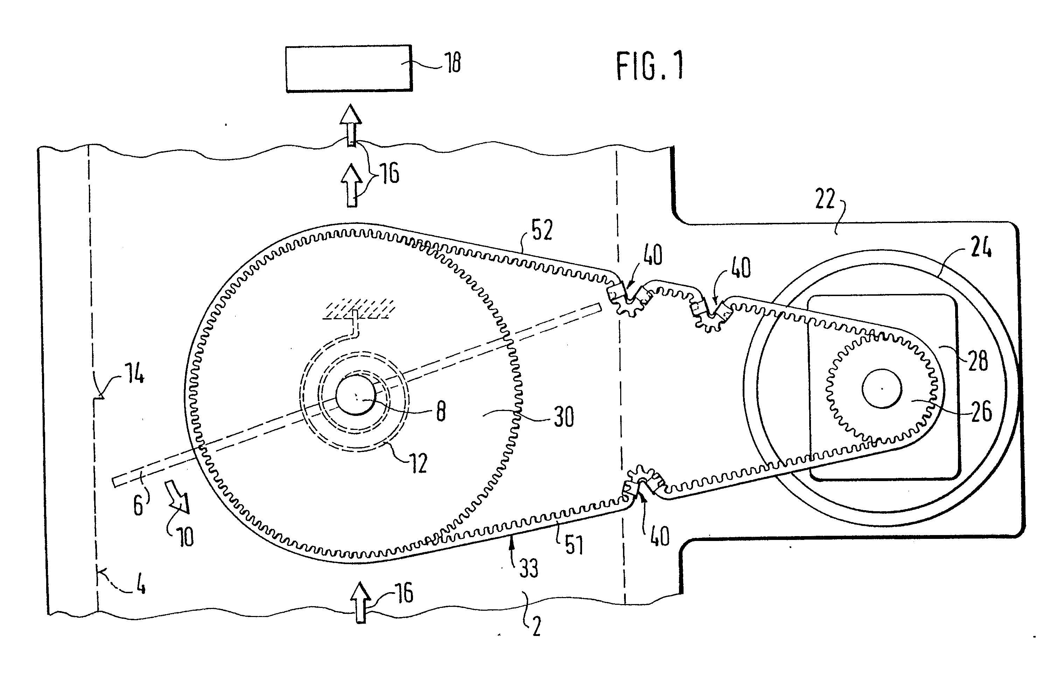

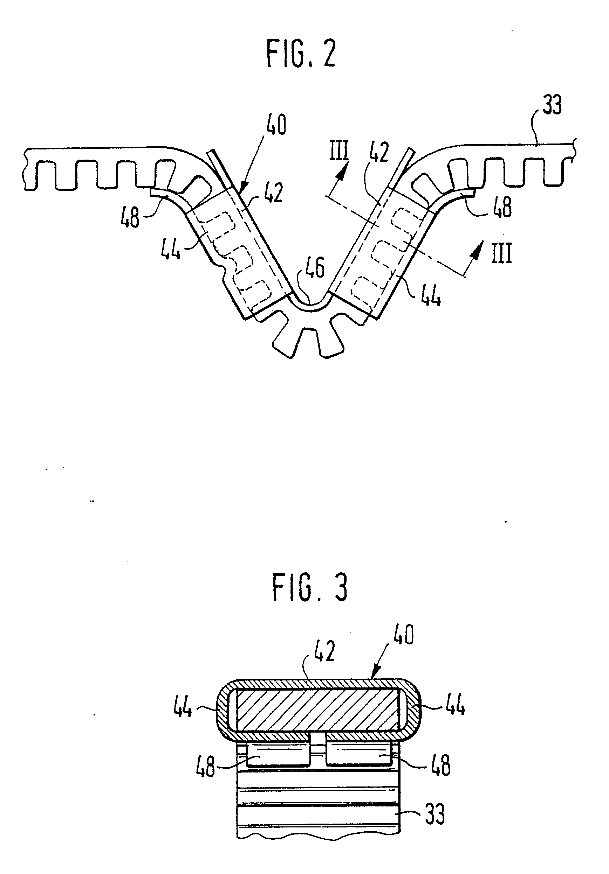

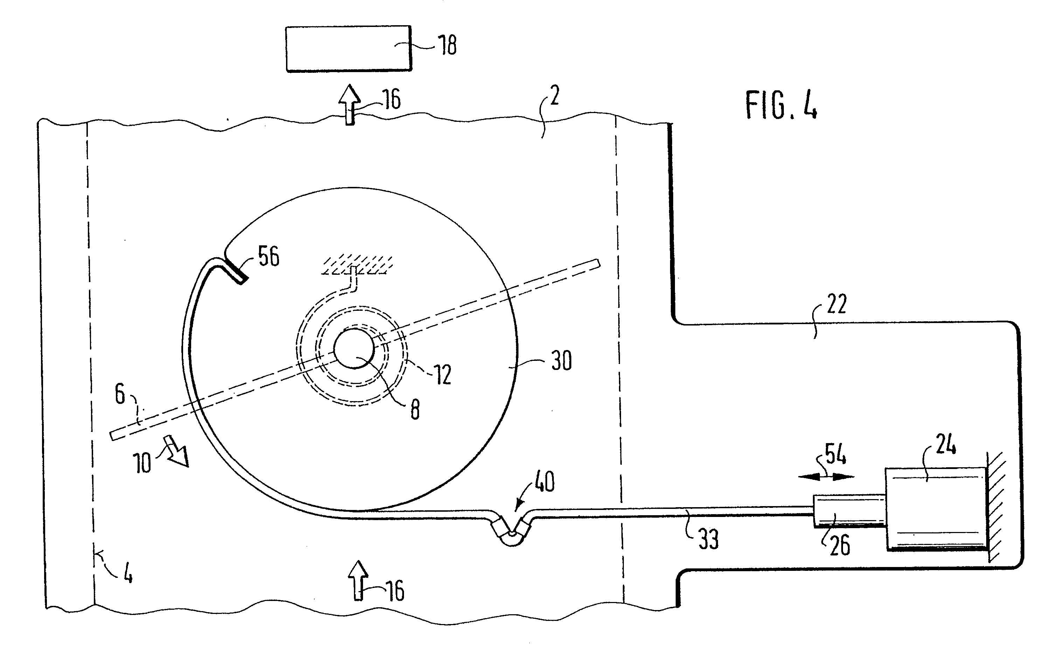

Zwei Ausführungsbeispiele der Erfindung sind in der Zeichnung vereinfacht dargestellt und in der nachfolgenden Beschreibung näher erläutert. Es zeigen die Figur 1 das erste Ausführungsbeisgiel, die Figur 4 das zweite Ausführungsbeispiel und die Figuren 2 und 3 das verformbare bzw. vorgeformte Element in geändertem Maßstab, wie es für die beiden Ausführungsbeispiele verwendet werden kann.

### Beschreibung der Ausführungsbeispiele

Obwohl nicht allein darauf begrenzt, wird das erfindungsgemäße Zugmittelgetriebe 2, 26, 30, 33 und 40 an Ausführungsbeispielen erläutert, bei denen über das Zugmittelgetriebe eine Drosselklappe 6 zur Steuerung einer Leistung einer Antriebsmaschine 18 eines Kraftfahrzeuges gesteuert werden soll.

Die Figur 1 zeigt ein erstes Ausführungsbeispiel eines erfindungsgemäßen Zugmittelgetriebes. Dargestellt ist eine Seitenansicht eines Ausschnitts eines Drosselorgangehäuses 2, durch das als Hohlraum ein Saugrohrquerschnitt 4 hindurchführt. Etwa in der Mitte des Saugrohrquerschnitts 4 ist eine Drosselklappe 6 an einer Welle 8 innerhalb des Drosselorgangehäuses 2 drehbar gelagert. Durch Drehen der Drosselklappe 6 entgegen Uhrzeigersinn kann ein freier Querschnitt des Saugrohrquerschnitts 4 vergrößert werden. Diese Drehrichtung ist durch einen Pfeil 10 symbolisiert. An dem Drosselorgangehäuse 2 ist eine Rückstellfeder 12 angeordnet. Die Rückstellfeder 12 wirkt mit ihrem einen Ende auf das Drosselorgangehäuse 2 und mit ihrem anderen Ende über die Welle 8 auf die Drosselklappe 6 entgegen Pfeilrichtung 10. Die Rückstellfeder 12 kann, sofern keine weiteren Kräfte auf die Welle 8 wirken, die Drosselklappe 6 entgegen Pfeil 10 drehen, bis die Drosselklappe 6 an einer innerhalb des Saugrohrquerschnitts 4 vorgesehenen Nase 14 anliegt. Liegt die Drosselklappe 6 an der Nase 14 an, so erreicht der freie Querschnitt des Saugrohrquerschnitts 4 sein Minimum bzw. der Saugrohrquerschnitt 4 ist vollständig geschlossen. Ausgehend von dieser Lage der Drosselklappe 6 kann die Drosselklappe in Pfeilrichtung 10 um bis zu 90°, was einem Viertel einer Umdrehung entspricht, gedreht werden. Wird die Drosselklappe 6, ausgehend von ihrer Ruhelage an der Nase 14 um 90° gedreht, so erreicht der freie Querschnitt des Saugrohrquerschnitts 4 sein Maximum.

Über die Drosselklappe 6 kann eine durch den Saugrohrquerschnitt 4 hindurchströmende und durch Pfeile 16 symbolisierte Strömung beeinflußt werden. Die Strömung 16 ist beispielsweise ein Gemisch aus Luft und Kraftstoff. Über die Beeinflussung der Strömung 16 kann eine Leistung der Antriebsmaschine 18 beeinflußt werden.

Der Saugrohrquerschnitt 4, die Drosselklappe 6, die Rückstellfeder 12 und die Nase 14 befinden sich innerhalb des Drosselorgangehäuses 12 und sind von außen nicht sichtbar, weshalb diese Teile in der Zeichnung gestrichelt dargestellt sind.

An das Drosselorgangehäuse 2 ist eine Erweiterung 22 angeformt. Innerhalb der Erweiterung bzw. an der Erweiterung 22 ist ein Stellmotor 24 angeordnet. Der Stellmotor 24 treibt ein erstes Getriebeelement 26. Der Stellmotor 24 treibt das erste Getriebeelement 26 gegebenenfalls über ein Getriebe 28. An der Welle 8, an der die Drosselklappe 6 befestigt ist, ist ein zweites Getriebeelement 30 drehfest angeordnet. Die beiden Getriebeelemente 26, 30 sind über ein Zugmittel 33 miteinander verbunden. Das Zugmittel 33 dient zu Übertragungen von Bewegungen und Kräften bzw. Drehmomenten zwischen den Getriebeelementen 26, 30. Bei Bedarf können mehr als zwei Getriebeelemente 26, 30 über das Zugmittel 33 verbunden sein. Über weitere Getriebeelemente 26, 30 können weitere bewegbare Teile betätigt werden.

Der Stellmotor 24 ist in dem ersten Ausführungsbeispiel nach Figur 1 ein Rotationsmotor, die beiden Getriebeelemente 26, 30 sind je ein Zahnriemenrad und das Zugmittel 33 ist ein Zahnriemen. Eine Übertragung von Bewegungen zwischen den beiden Getriebeelementen/Zahnriemenrädern 26, 30 kann nur störungsfrei erfolgen, wenn eine wirksame Länge des Zugmittels/Zahnriemens 33 dem Abstand zwischen den beiden Getriebeelementen 26, 30 und deren Durchmesser möglichst genau angepaßt ist.

Der Abstand zwischen den Getriebeelementen 26, 30 und deren Durchmesser sowie die tatsächliche Länge des Zugmittels kann wegen nie ganz zu vermeidender Fertigungstoleranzen erheblich schwanken.

Mit Hilfe eines bleibend verformbaren Elementes 40 kann die wirksame Länge des Zugmittels 33 in vorteilhafter Weise einfach, bequem, schnell und sicher auf ein gewünschtes Maß gebracht werden. Die wirksame Länge des Zugmittels 33 kann durch bedarfsgerechte Verformung des verformbaren Elementes 40 auch noch verändert werden, wenn der Zahnriemen 33 bereits auf die Zahnriemenräder 26, 30 aufgelegt ist. Das verformbare Element 40 ist auch deshalb so vorteilhaft, weil die wirksame Länge des Zugmittels 33 bei Bedarf jederzeit nachträglich korrigiert werden kann. Dazu muß das Element 40 nicht ausgebaut werden. Ist z.B. das Zugmittel 33 selbst ausreichend elastisch, so kann über das verformbare Element 40 in dem Zugmittel 33 auch eine evtl. gewünschte Vorspannung eingestellt werden. Bei dem erfindungsgemäßen Zugmittelgetriebe kann ein verformbares Element 40 oder mehrere verformbare Elemente 40 vorgesehen sein. Das verformbare Element 40 wird direkt an dem Zugmittel/Zahnriemen 33 an geeigneter Stelle befestigt. Die mindestens zwei Getriebeelemente 26, 30, das Zugmittel 33, mindestens ein bleibend verformbares Element 40 und mindestens Teile des Drosselorgangehäuses 2 sind wesentliche Bestandteile des erfindungsgemäßen Zugmittelgetriebes.

Das Zugmittel 33 ist in dem gewählten Ausführungsbeispiel nach Figur 1 ein sogenannter endloser Zahnriemen 33. Mit der tatsächlichen Länge des Zugmittels 33 ist die Länge gemeint, die das Zugmittel 33 ohne die verformbaren Elemente 40 hat, wenn es an einer beliebigen Stelle quer durchgeschnitten und gerade ausgelegt wird. Unter der wirksamen Länge soll die Länge verstanden werden, die das Zugmittel 33 bei angebautem verformbaren Element 40 hat, wenn das Zugmittel 33 abseits des Elementes 40 an einer beliebigen Stelle quer durchgeschnitten und in gerader Form ausgelegt ist. Durch das verformbare Element 40 kann die tatsächliche Länge des Zugmittels 33 auf die erforderliche, bedarfsgerechte wirksame Länge des Zugmittels 33 verkürzt werden.

Das verformbare Element 40 wird beispielsweise aus einem Blech, insbesondere aus einem Stahlblech ausgestanzt und durch Biegen an dem Zugmittel 33 in geeigneter Weise befestigt. Die Figur 2 zeigt einen Ausschnitt aus der Figur 1 in geändertem Maßstab. In der Figur 2 ist das verformbare Element 40 und ein Teil des Zugmittels 33 in einem Bereich, in dem sich das Element 40 befindet, besonders hervorgehoben. In allen Figuren werden gleiche oder gleichwirkende Teile mit denselben Bezugszeichen versehen.

Das bleibend verformbare Element 40 kann zwecks besserer Betrachtung untergliedert werden in einen Rücken 42 und in vier je zweimal um 90° umgebogene Laschen 44. Der Rücken 42 hat in etwa die gleiche Breite wie der Zahnriemen 33. Bei Montage des verformbaren Elementes 40 am Zahnriemen 33 wird zunächst der Rücken 42 auf den Zahnriemen 33 aufgelegt. Dabei stehen die Laschen 44 seitlich über den Zahnriemen 33 hinaus. In Längsrichtung des Zahnriemens 33 betrachtet, stehen am Rücken 42 des Elementes 40 links und rechts je zwei Laschen 44 über den Rücken 42 hinaus. Ebenfalls in Längsrichtung betrachtet, ist links und rechts des Rückens 42 zwischen den Laschen 44 auf jeder Seite ein Abstand vorhanden. Bei Montage des Elementes 40 am Zahnriemen 33 wird das Element 40 an den Übergangsstellen zwischen dem Rücken 42 und den Laschen 44 um etwa 90° in Richtung der Seite, an der der Rücken 42 am Zahnriemen 33 anliegt, umgebogen. Dabei überragen die Laschen 44 den Zahnriemen 33 weiterhin auf der dem Rücken 42 abgewandten Seite. Der überragende Teil der Lasche 44 wird nochmals um etwa 90° umgebogen, so daß das bleibend verformbare Element 40 den Zahnriemen 33 nahezu vollständig umschließt, wie es die Figur 3 zeigt. Die Figur 3 ist ein Schnitt quer durch den Zahnriemen 33 und durch das verformbare Element 40 entlang der in Figur 2 gezeigten Linie III-III. Je zwei beiderseits des Rückens 42 herausragende Laschen 44 bilden je eine Gruppe von Laschen. Das in der Zeichnung dargestellte verformbare Element 40 hat zwei Gruppen von Laschen 44.

Die wirksame Länge des Zugmittels 33 kann eingestellt werden, indem der Rücken 42 des verformbaren Elementes 40 in einem Bereich 46 zwischen den beiden Gruppen von Laschen 44 mehr oder weniger gebogen wird. Der Rücken 42 wird im Bereich 46 zwischen den beiden Gruppen von Laschen 44 vorzugsweise so gebogen, daß zwischen den beiden Gruppen von Laschen 44 ein Kreisbogen 46 entsteht. Aus dem Bereich 46 entsteht der Kreisbogen 46. Den Kreisbogen 46 wird man vorzugsweise so gestalten, daß einerseits das verformbare Element 40 insgesamt nicht zu groß wird, aber andererseits das Zugmittel 33, dort wo es an dem Kreisbogen 46 anliegt, nicht unzulässig scharf abgebogen wird. Das verformbare Element 40 ist so geformt, daß das Zugmittel 33 sich auf einer Außenbahn des Kreisbogens 46 befindet. Wird das Zugmittel 33 im Bereich des verformbaren Elementes 40 unter Zug gesetzt, dann wird das Zugmittel 33 auch im Bereich, wo es das verformbare Element 40 verläßt, abgebogen. Damit das Zugmittel 33 an dieser Stelle nicht unzulässig stark geknickt wird, kann zur Stützung des Zugmittels 33 in diesem Bereich in beiden Gruppen der Laschen 44 je ein weiterer äußerer Kreisbogen 48 angeformt werden. Die äußeren Kreisbögen 48 befinden sich auf der dem Rücken 42 abgewand ten Seite des Zugmittels 33. Wie Figur 3 zeigt, stoßen die Laschen 44 auf der dem Rücken 42 abgewandten Seite des Zugmittels 33 in etwa in der Mitte fast zusammen; d.h. zwischen den Laschen 44 besteht bei Blick auf den in Figur 3 gezeigten Schnitt ein kleiner Zwischenraum. Die Figur 3 zeigt ferner, daß an jede der Laschen 44 je bin äußerer Kreisbogen 48 angeformt ist.

Die Drosselklappe 6 kann über das Zugmittelgetriebe in Richtung des Pfeiles 10 durch den Stellmotor 24 betätigt werden. In entgegengesetzter Richtung wird die Drosselklappe 6 durch die Rückstellfeder 12 betätigt. Bei dem dargestellten Ausführungsbeispiel in Figur 1 handelt es sich um ein sogenanntes geschlossenes Zugmittelgetriebe mit einem geschlossenen, d. h. endlosen Zugmittel 33. Da die Drosselklappe 6 um maximal 90° gedreht werden muß, läuft das Zugmittel 33 nicht vollständig um, sondern macht nur mehr oder weniger große Hin- und Herbewegungen. Da auf die Drosselklappe 6 über das Zugmittel 33 nur in Richtung des Pfeiles 10 eingewirkt werden muß, werden nur über einen Teil des Zugmittels 33 Zugkräfte übertragen.

Dieser zwischen den beiden Getriebeelementen 26, 30 befindliche Teil des Zugmittels 33 wird üblicherweise als ziehendes Trum 51 bezeichnet. Der andere Teil des Zugmittels 33 zwischen den beiden Getriebeelementen 26, 30 wird üblicherweise als gezogenes Trum 52 bezeichnet. Da die Kräfte in dem ziehenden Trum 51 größer sind als im gezogenen Trum 52, ist es aus Festigkeitsgründen besonders gunstig, das verformbare Element 40 im gezogenen Trum 52 vorzusehen. Bei entsprechender festigkeitsmäßiger Dimensionierung des bleibend verformbaren Elementes 40 ist es aber auch ohne weiteres möglich, dieses auch im ziehenden Trum 51 vorzusehen. Am Zugmittel 33 kann ein verformbares Element 40 oder bei Bedarf auch mehrere verformbare Elemente 40 vorgesehen sein. Da das Zugmittel 33 nur mehr oder weniger große Hinund Herbewegungen ausführt, ist es möglich und auch zweckmäßig, das verformbare Element 40 so anzubringen, daß es die Getriebeelemente 26, 30 nicht berührt. In Abhängigkeit von dem Weg um den das Zugmittel 33 betätigt werden soll, ist der Abstand zwischen den Getriebeelementen 26, 30 ausreichend groß zu wählen.

Bei einigen Zugmitteln 33, wie z.B. Flachriemen oder dergleichen, ist es möglich das verformbare Element 40 auch dann einzusetzen, wenn das Zugmittel 40 kontinuierlich umläuft. Um hierbei einen ungestörten Betrieb zu gewährleisten, ist es zweckmäßig, das verformbare Element 40 am Zugmittel 33 so anzubringen, daß die Ausbauchung des Zugmittels 33 im Bereich des verformbaren Elementes 40 nach außen weist, während das verformbare Element 40 über eines der Getriebeelemente 26, 30 läuft.

Je nach Anwendungsfall kann bei dem Drosselorgangehäuse 2 auch auf die Rückstellfeder 12 verzichtet werden. Die Verstellung der Drosselklappe 6 erfolgt dann in beide Drehrichtungen über ein von dem Stellmotor 24 auf zubringendes Moment. In diesem Fall vertauschen sich je nach Drehrichtung das ziehende Trum 51 mit dem gezogenen Trum 52 gegenseitig. In diesem Fall muß das verformbare Element 40 so dimensioniert sein, daß es auch im ziehenden Trum eingesetzt werden kann.

Im Ausführungsbeispiel beinhaltet das Zugmittelgetriebe zwei Getriebeelemente 26, 30. Eines der beiden Getriebeelemente 26, 30 ist ein antreibendes Getriebeelement 26 und das andere Getriebeelement ist ein angetriebenes Getriebeelement. Je nach Anwendungsfall ist es möglich, daß die treibende Kraft mal von dem einen Getriebeelement und mal von dem anderen Getriebeelement 26, 30 kommt. Es ist auch möglich, mehr als zwei Getriebeelemente 26, 30 mit einem Zugmittel 33 zu verbinden.

Das Zugmittel 33 kann ein geschmeidiges Zugmittel, wie z. B. ein Zahnriemen, ein Keilriemen, ein Flachriemen, ein Seil, ein Band usw. oder ein gegliedertes Zugmittel 33, wie z. B. eine Kette, sein.

Im ersten Ausführungsbeispiel nach Figur 1 sind beide Getriebeelemente 26, 30 rotatorisch sich bewegende Elemente und das Zugmittel 33 ist ein geschlossenes, endloses Zugmittel 33. Es ist aber auch möglich, daß mindestens eines der Getriebeelemente 26, 30 eine translatorische Bewegung ausführt. Die Figur 4 zeigt ein derartiges Ausführungsbeispiel. Hier ist der Stellmotor 24 ein Hydraulikzylinder 24 und das Getriebeelement 26 ist eine Kolbenstange des Hydraulikzylinders 24. Das in Form einer Kolbenstange ausgebildete Getriebeelement 26 kann eine lineare Bewegung parallel zu einem in der Figur 4 angegebenen Doppelpfeiles 54 ausführen. Die lineare Bewegung des ersten Getriebeelementes 26 wird über das Zugmittel 33 auf das zweite Getriebeelement 30 übertragen, welches eine rotatorische Bewegung um 90° ausführen kann. Hier ist das Zugmittel 33 endlich. Ein Ende des Zugmittels 33 ist an einer Klemmstelle 56 fest mit dem zweiten Getriebeelement 30 verbunden. Das Zugmittel 33 ist im zweiten Ausführungsbeispiel ein Flachriemen, der sich je nach Bewegungsrichtung auf das Getriebeelement 30 aufwickelt oder von diesem abwickelt. Über das verformbare Element 40 in dem Zugmittel 33 kann die wirksame Länge des Zugmittels 33 exakt eingestellt werden. Damit kann eine Stellposition eines der Getriebeelemente 26, 30 auf eine Stellposition des jeweils anderen Getriebeelementes 26, 30 genau abgestimmt werden. D. h. in dem zweiten Ausführungsbeispiel kann z. B. die Ruhelage der Drosselklappe 6 exakt eingestellt werden. Die Ruhelage der Drosselklappe 6 ist auch in diesem Ausführungsbeispiel die Lage, in der der Saugrohrquerschnitt 4 möglichst weit geschlossen ist.

Anstatt, wie bereits beschrieben, das Element 40 in passender Weise zu verformen, ist es auch möglich, das Element 40 bereits vorgeformt zu verwenden. Ebenfalls zweckmäßig ist es, ein passend vorgeformtes Element 40 aus einem Sortiment verschieden vorgeformter Elemente 40 auszuwählen. Je nach Wahl des passend vorgeformten Elementes 40 kann das Zugmittel 33 auf die gewünschte wirksame Länge eingestellt wer den. Das vorgeformte Element 40 kann in gleicher Weise und Stückzahl wie das verformbare Element 40 an dem Zugmittel 33 angeordnet werden.

Auch die Verwendung eines teilweise vorgeformten Elementes 40 ist möglich.

## Ansprüche

1. Zugmittelgetriebe, insbesondere für eine Stelleinrichtung einer Antriebsmaschine eines Fahrzeugs, mit mindestens zwei Getriebeelementen sowie mit einem Zugmittel zum Übertragen von Bewegungen zwischen den beiden Getriebeelementen, dadurch gekennzeichnet, daß an dem Zugmittel (33) mindestens ein bleibend verformbares Element (40) angeordnet ist, wobei über eine Verformung dieses Elementes (40) eine wirksame Länge des Zugmittels (33) einstellbar ist.

2. Zugmittelgetriebe nach Anspruch 1, dadurch gekennzeichnet, daß das bleibend verformbare Element (40) aus einem Blechstück besteht und einen Teil des Zugmittels (33) mindestens teilweise umschlingt.

3. Zugmittelgetriebe, inbesondere für eine Stelleinrichtung einer Antriebsmaschine eines Fahrzeugs, mit mindestens zwei Getriebeelementen sowie mit einem Zugmittel zum Übertragen von Bewegungen zwischen den beiden Getriebelementen, dadurch gekennzeichnet, daß an dem Zugmittel (33) mindestens ein vorgeformtes Element (40) angeordnet ist, durch das das Zugmittel (33) quer zu einer Längsrichtung ausgelenkt ist, wobei eine wirksame Länge des Zugmittels (33) über das vorgeformte Element (40) einstellbar ist.

4. Zugmittelgetriebe nach Anspruch 4, dadurch gekennzeichnet, daß das vorgeformte Element (40) aus einem Sortiment verschieden vorgeformter Elemente (40) ausgewählt ist.

5. Zugmittelgetriebe nach Anspruch 3 oder 4, dadurch gekennzeichnet, daß das vorgeformte Element (40) einen Teil des Zugmittels (33) mindestens teilweise umschlingt.

6. Zugmittelgetriebe nach einem der vorhergehenden Ansprüche, dadurch gekennzeichnet, daß mindestens eines der Getriebeelemente (26, 30) rotatorisch bewegbar ist.

7. Zugmittelgetriebe nach einem der vorhergehenden Ansprüche, dadurch gekennzeichnet, daß mindestens eines der Getriebeelemente (26, 30) linear bewegbar ist.

8. Zugmittelgetriebe nach einem der vorhergehenden Ansprüche, dadurch gekennzeichnet, daß das Zugmittel (33) ein geschlossenes, endloses Zugmittel (33) ist.

9. Zugmittelgetriebe nach einem der Ansprüche 1 bis 7, dadurch gekennzeichnet, daß das Zugmittel (33) ein endliches Zugmittel (33) ist.

FIG.1

# FIG. 2

# FIG. 3

FIG. 4

Europäisches
Patentamt

# EUROPÄISCHER
# RECHERCHENBERICHT

Nummer der Anmeldung

**EP 90 11 6315**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-9 656 14   (HIRSCH)<br>* Seiten 2 - 3; Figuren 1-2 *<br>— — — | 1,2,3,6,8 | F 16 H<br>7/08<br>F 02 D 11/10 |
| A | EP-A-0 317 813   (ROBERT BOSCH GMBH)<br>* Zusammenfassung; Figur 1 *<br>— — — | 1,6,8 | |
| A | DE-C-3 825 075   (DAIMLER-BENZ AKTIENGESELL-SCHAFT)<br>* Spalte 3; Figur 1 *<br>— — — — — | 1,6,8 | |
| | | | **RECHERCHIERTE SACHGEBIETE (Int. Cl.5)**<br><br>F 16 H<br>B 23 Q<br>F 02 D |

Der vorliegende Recherchenbericht wurde für alle Patentansprüche erstellt

| Recherchenort | Abschlußdatum der Recherche | Prüfer |
|---|---|---|
| Den Haag | 10 Januar 91 | FLORES E. |